# EUROPEAN PATENT SPECIFICATION

(11) **EP 1 512 451 B1**
(45) Date of publication and mention of the grant of the patent: **13.09.2006**
(21) Application number: 04386017.0
(22) Date of filing: 27.05.2004
(51) Int. Cl.: B01D 36/00, F02M 37/22, B01D 17/02

(54) **Water warning system in fuel of petrol and diesel internal combustion engines**
Wasserwarnsystem im Brennstoff von Otto- und Diesel-Brennkraftmaschinen
Système d'alerte de détection d'eau dans le carburant des moteurs essence ou diesel

(30) Priority: 04.09.2003 GR 2003200104
(43) Date of publication of application: 09.03.2005
(73) Proprietor: Fachidis, Michail, 57001 Neo Risio-Thermi (GR)
(72) Inventor: Fachidis, Michail, 57001 Neo Risio-Thermi (GR)
(74) Representative: Weise, Reinhard

(56) References cited:
- EP-A- 0 715 873
- WO-A-01/33069
- DE-C- 3 740 804
- GB-A- 2 065 336
- GB-A- 2 121 187
- GB-A- 2 140 319
- US-A- 4 276 161
- US-A- 4 562 431
- US-A- 5 213 682

## Description

The invention is referred to a water warning system that is used for the detection of water in the fuel of petrol and diesel engines.

The water detection systems are widely known and applied to various types of engines, mostly to sea craft engines. The detection of water with such systems was performed on the engine, where the system was placed.

Document US 4,276,161 describes a water level detecting means comprising the features according to the preamble of claim 1.

The present invention is referred to a water detection system that consists of a water trap with an electronic system connected through probes, an electronic circuit feeding cable with a connection plug, a cable tress with a plug at its end, a buzzer with connection plug and feeding cables with a safety case.

Beside the advantages that the water detection systems present, they also present disadvantages. Until now, waterholder filters exists that via gravity hold water inside the fuel, but there is no luminous or sound signal to indicate the removal of it by the user. In some other cases the filter is incorporated to the engine and the removal of water is very difficult for the user. For example, the placement of the system on the engine, into the frame that encloses it, prevents from approaching it and restrains the removal of the water. The above systems warn about the existence of water but they don't offer the capability of its removal or allow the removal but only in the case that the user indicate the fact by vision. This can result the malfunction of the engine in case water enters into the combustion chamber and possible absence of government of the craft. Moreover, the entering of water into the fuel filter might destroy it.

The scope of the present invention is the creation of a water detection system, in consistency with the referred above, that can be placed easily between the reservoir and the fuel filter, can give the capability of warning about the existence of water in the fuel and also allow the removal of it with temporary pause of the operation of the engine.

According to the invention, this can be succeed with a water detection system of the type previously described, with the placement of a water trap with an incorporated electronic system between the reservoir and the fuel filter, at a point that there is optical contact of it. The water trap is connected to the buzzer, which is placed at such a point that can be heard in case of stimulation of the system.

A water detection system presents plenty of advantages, according to the invention presented. Taking for granted that the water trap is placed at the fuel conductor, between the reservoir and the filter, a possible detection of water into the fuel is achieved in time before it passes through the filter and long before the fuel inserts into the engine. With such means, the destruction of the fuel filter and possible malfunctions of the engine is prevented. The placement of the water trap into the engine at a visible place, allows so the observation of the indicative light in case water is contained in the fuel as the easy removal of the water from the inside of it. The existence of water into the water trap is declared by the color of the indicative light that remains green as long as the fuel is passing through it but becomes red when the content of water in the fuel exceeds about the 10%. In addition, the placement of a buzzer that is connected to the water trap near the operator, gives the capability of immediate perception of water existence into the fuel, through sound signal of high frequency.

The detection of water is performed through two probes that are connected to the electronic circuit and are continuously under voltage. The existence of water in the fuel operates as a conductor and the operation of the system is fully reliable. The probes are set under low voltage 5 V that cannot cause sparking in any case. The power consumption both when the system is paused and started is measured in mA. The electronic circuit is waterproof placed on the top of the water trap and in the interior is protected with resin. The vessel of the water trap is made of durable plastic, with encounter strength and is screw connected with its upper part and an o-ring is intervened in order to achieve water tightness.

The invention is referred below with the help of an example and the attached drawings:
The drawing 1 presents a perspective view of the water trap of the system and the rest parts are presented symbolically in conformity with the present invention.

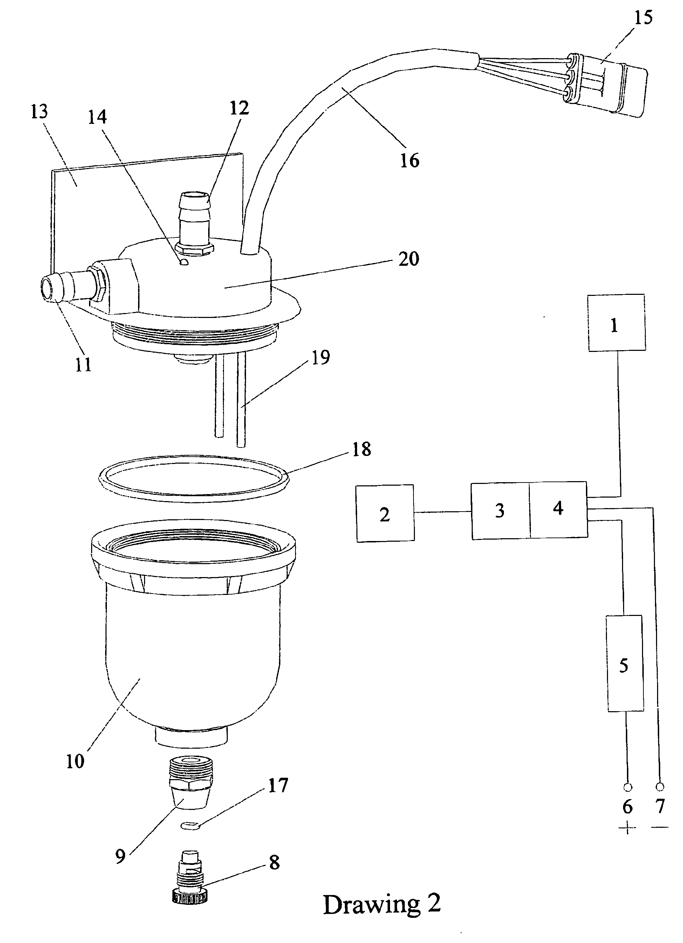

The drawing 2 presents a perspective view of the water trap of the system in explosion and the rest parts are presented symbolically.

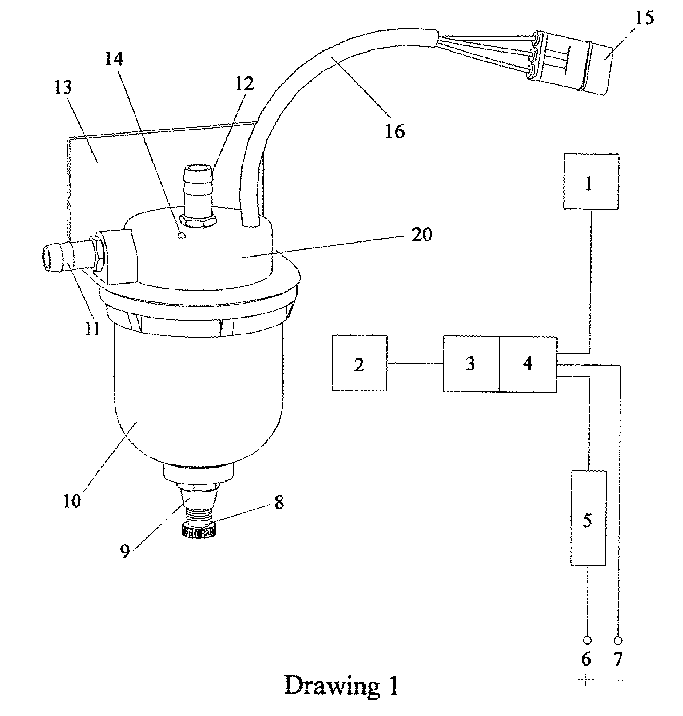

The drawing 1 presents a perspective view of the water trap of the system and the rest parts are presented symbolically. The cable tress with the connection plugs (1) (4) is connected at its end, at the side of the plug (1), with the plug (15) of the power cable (16) of the electronic circuit (20) at the inside of the water trap (13). The cable tress at the side of the plug (4) is connected with the connection plug (3) of the buzzer (2) and the power cables - terminals (6) - (7). The terminal (6) is connected with the positive terminal under mechanic voltage (e.g. revolution counter) and the terminal (7) with the negative one. Between the terminal (6) and the connection plug of the cable tress (4) there is a safety case (5) 1 A.

The water trap (13) contains the vessel through which the fuel passes. The insertion of the fuel is performed through the conductor (11) and the outlet from the conductor (12). On the top of the water trap (13) a water detection indicative light (14) is placed. When the color of the light (14) is green the system operates normally but just when it turns up to red the system has detected water into the fuel and the buzzer (2) starts to sound. At the bottom of the vessel of the water trap (13) a water outlet pipe union is placed that consists of the screw part (8) and the stable part (9) on the vessel (10) of the water trap (13).

The connection of the two parts (8), (9) of the water outlet pipe union is done with the intervention of the o-ring (17). The vessel (10) of the water trap (13) is also water proofed by an o-ring (18).

The water trap (13) has two probes (19) connected to the electronic circuit (20) that are placed at the interior of its vessel (10) and conduct the fuel continuously.

## Claims

1. Water detection system for the detection of water in the fuel of petrol and diesel engines comprising a water trap (13), a cable tress and a buzzer (2), wherein the water trap (13) is placed between a reservoir and a fuel filter apart from the engine and has an incorporated electronic circuit (20) being powered by electricity current of mechanism under low voltage and being connected with said buzzer (2) for indicating water in the fuel,
**characterized in that**
said electronic circuit (20) is placed at the inside of said water trap (13); and **in that**
a water detection indicative light (14) is placed on top of said water trap (13) for indicating water in the fuel.

2. Water detection system according to claim 1, **characterized in that** said water trap has two probes (19) being placed at the inside of said water trap (13) and being connected with said electronic circuit (20) for detecting water in the inside of said water trap (13).

3. Water detection system according to claim 2, **characterized in that** said water trap (13) contains a vessel (10) through which the fuel passes wherein a water outlet pipe union (8, 9) for the outlet of water as soon as it is detected by the probes (19) is formed at the bottom of said vessel (10).

## Patentansprüche

1. Wasser-Erfassungssystem für die Erfassung von Wasser im Kraftstoff von Otto- und Diesel-Motoren mit einem Wasser-Auffangbehälter (13), einem Kabelbaum und einem Summer (2), wobei der Wasser-Auffangbehälter (13) zwischen einem Tank und einem Kraftstoff-Filter vom Motor getrennt angeordnet ist und eine eingebaute elektronische Schaltung (20) aufweist, die durch elektrischen Strom einer Niederspannungseinrichtung mit Energie versorgt wird und an den Summer (2) zur Anzeige von Wasser im Kraftstoff angeschlossen ist,
**dadurch gekennzeichnet,**
**dass** die elektronische Schaltung (20) im Inneren des Wasser-Auffangbehälters (13) angeordnet ist; und
**dass** eine Wassererfassungs-Anzeigeleuchte (14) an der Oberseite des Wasser-Auffangbehälters (13) zum Anzeigen von Wasser im Kraftstoff angeordnet ist.

2. Wasser-Erfassungssystem nach Anspruch 1, **dadurch gekennzeichnet, dass** der Wasser-Auffangbehälter zwei Sonden (19) aufweist, die im Inneren des Wasser-Auffangbehälters (13) angeordnet und an die elektronische Schaltung (20) zum Erfassen von Wasser im Inneren des Wasser-Auffangbehälters (13) angeschlossen sind.

3. Wasser-Erfassungssystem nach Anspruch 2, **dadurch gekennzeichnet, dass** der Wasser-Auffangbehälter (13) ein Gefäß (10) enthält durch das der Kraftstoff strömt, wobei ein Wasser-Auslassrohranschluss (8, 9) für das Auslassen von Wasser, sobald dieses durch die Sonden (19) erfasst ist, am Boden des Gefäßes (10) ausgebildet ist.

## Revendications

1. Système de détection d'eau dans le carburant de moteurs essence ou diesel comprenant un décanteur (13), une tresse de câble et un avertisseur sonore (2), dans lequel le décanteur (13) est disposé entre un réservoir et un filtre à carburant éloigné du moteur et comprend un circuit électronique incorporé (20) alimenté par un courant électrique pour mécanisme basse tension et connecté audit avertisseur sonore (2) pour indiquer la présence d'eau dans le carburant, **caractérisé en ce que**
ledit circuit électronique (20) est disposé à l'intérieur dudit décanteur (13) ; et **en ce que** un témoin lumineux (14) de détection d'eau est disposé au-dessus dudit décanteur (13) pour indiquer la présence d'eau dans le carburant.

2. Système de détection d'eau selon la revendication 1, **caractérisé en ce que** ledit décanteur comporte deux sondes (19) disposées à l'intérieur dudit décanteur (13) et connectées audit circuit électronique (20) pour détecter la présence d'eau à l'intérieur dudit décanteur (13).

3. Système de détection d'eau selon la revendication 2, **caractérisé en ce que** ledit décanteur (13) contient un récipient (10) à travers lequel passe le carburant, dans lequel système un raccord (8, 9) de tuyau de sortie d'eau permettant l'évacuation de l'eau dès qu'elle est détectée par les sondes (19) est pourvu au fond dudit récipient (10),
